(19)

Europäisches
Patentamt
European
Patent Office
Office européen
des brevets

(11) **EP 3 547 784 A1**

(12) **EUROPEAN PATENT APPLICATION**
published in accordance with Art. 153(4) EPC

(43) Date of publication:
**02.10.2019 Bulletin 2019/40**

(51) Int Cl.:
**H04W 74/08** (2009.01)　　**H04W 74/00** (2009.01)
**H04W 72/04** (2009.01)

(21) Application number: **16922300.5**

(22) Date of filing: **28.11.2016**

(86) International application number:
**PCT/KR2016/013788**

(87) International publication number:
**WO 2018/097371 (31.05.2018 Gazette 2018/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **LG Electronics Inc.**
**Seoul 07336 (KR)**

(72) Inventors:
• **BAEK, Jongseob**
**Seoul 06772 (KR)**
• **KO, Woosuk**
**Seoul 06772 (KR)**

(74) Representative: **Katérle, Axel**
**Wuesthoff & Wuesthoff**
**Patentanwälte PartG mbB**
**Schweigerstraße 2**
**81541 München (DE)**

(54) **DEVICE AND METHOD FOR V2X COMMUNICATION**

(57)　Disclosed is a method of operating multi-channels of a V2X communication device. The method of operating multi-channels includes accessing a control channel (CCH) for system management information or service advertisement information exchange; receiving the service advertisement information via the accessed CCH; accessing to a service channel (SCH) for transmission or reception of application data for providing the service based on the service advertisement information; and receiving the service data via the SCH.

Fig. 2

**Description**

[Technical Field]

The present invention relates to a device and method for V2X communication, and more particularly, to a multi-channel access method, a multi-channel operation method, and a time interval configuring method when accessing to multi-channels for V2X communication.

[Background Art]

Nowadays, vehicles are becoming from a product of Mechanical Engineering to a product of complex industrial technology in which electrical technology, electronic technology, and communication technology are fused and in this regard, the vehicle is called a smart car. The smart car connects a driver, a vehicle, and a traffic infrastructure to provide various user customized mobile services as well as traditional vehicle technology, such as traffic safety/jam solution. Such connectivity may be implemented using vehicle to everything (V2X) communication technology.

[Disclosure]

[Technical Problem]

Various services may be provided through V2X communication. Further, in order to provide various services, a plurality of frequency bands is used. In even such an environment, in view of characteristics of vehicle communication, transfer and provision without delay of a safety service is a very important issue. In particular, there is a need for a configuration of a time interval for access to a control channel and a service channel together with an access method to a plurality of channels.

[Technical Solution]

In order to solve the above technical problem, a method of operating a multi-channel of a V2X communication device according to an embodiment of the present invention includes accessing to a control channel (CCH) for service advertisement information exchange; receiving the service advertisement information via the accessed CCH; accessing to a service channel (SCH) for transmission or reception of service data for providing the service based on the service advertisement information; and receiving the service data via the SCH, wherein (via) communication in the CCH is performed in a CCH interval, which is a time slot for control information communication, and communication in the SCH is performed in a SCH interval, which is a time slot for service information communication.
Further, in the multi-channel operation method according to an embodiment of the present invention, the CCH interval may include at least one of a guard interval, a security interval that communicates safety related service data, or a non-safety interval that communicates non-safety related service data.
Further, in the multi-channel operation method according to an embodiment of the present invention, the CCH interval may further include an RSU interval that communicates with a Road Side Unit (RSU).
Further, in the multi-channel operation method according to an embodiment of the present invention, the CCH interval may further include at least one of a time-sensitive safety interval or a time-sensitive non-safety interval, wherein the time-sensitive safety interval may be optionally included in the safety interval or the non-safety interval, and the time-sensitive non-safety interval may be optionally included in the non-safety interval.
Further, in the multi-channel operation method according to an embodiment of the present invention, communication of a critical safety message may be allowed during the non-safety interval.
Further, in the multi-channel operation method according to an embodiment of the present invention, communication of the safety interval or the non-safety interval may be performed based on interval information representing whether the safety interval or the non-safety interval exists and a ratio between the safety interval and the non-safety interval.
A V2X communication device for performing the above-described method includes a memory for storing data; a radio frequency (RF) unit for transmitting and receiving a radio signal; and a processor for controlling the RF unit, wherein the V2X communication device is configured to access to a control channel (CCH) for service advertisement information exchange; to receive the service advertisement information via the CCH; to access to a service channel (SCH) for transmission or reception of service data for providing the service based on the service information; and to receive the service data via the SCH, wherein (via) communication in the CCH is performed in a CCH interval, which is a time slot for control information communication, and communication in the SCH is performed in a SCH interval, which is a time slot for service information communication.

[Advantageous Effects]

According to the present invention, when multi-channels are operated, by using a detailed time-slot, transfer delay of a security service by contention of V2X communication can be minimized. According to the present invention, by allocating a service to each time slot in a CCH, contention in communication between services can be minimized. Further, communication of a safety message having a high priority can be allowed even in a non-safety interval or as a non-safety interval includes a time-sensitive safety interval, safety information can be quickly transferred. Because whether a safety interval and a non-safety interval exist and a length (ratio) of a safety interval and a non-safety interval is not fixed, resource waste can be minimized and efficiency of channel use can be improved.

[Description of Drawings]

The accompany drawings, which are included to provide a further understanding of the present invention and are incorporated in and constitute a part of this specification, illustrate embodiments of the present invention and together with the description, serve to explain the principles of the present invention.

FIG. 1 illustrates a reference architecture of an Intelligent Transport System (ITS) station according to an embodiment of the present invention.
FIG. 2 illustrates an ITS access layer according to an embodiment of the present invention.
FIG. 3 illustrates a conceptual internal architecture of a MAC sub-layer that performs a multi-channel operation (MCO) according to an embodiment of the present invention.
FIG. 4 illustrates the relationship between a user priority of EDCA and an Access Category (AC) according to an embodiment of the present invention.
FIG. 5 illustrates a physical layer configuration of a V2X transmission device according to an embodiment of the present invention.
FIG. 6 illustrates multi-channel allocation used for an ITS system operation according to an embodiment of the present invention.
FIG. 7 illustrates a channel coordination mode of a multi-channel operation according to an embodiment of the present invention.
FIG. 8 illustrates a time slot configuration method for a multi-channel operation according to an embodiment of the present invention.
FIG. 9 illustrates a time slot configuration method for an MCO according to an embodiment of the present invention.
FIG. 10 illustrates a time slot configuration method for an MCO according to an embodiment of the present invention.
FIG. 11 illustrates a time interval adjustment method according to an embodiment of the present invention.
FIG. 12 is a block diagram illustrating a V2X communication device according to an embodiment of the present invention.
FIG. 13 is a flowchart illustrating a method of operating a multi-channel of a V2X communication device according to an embodiment of the present invention.

[Mode for Invention]

Preferred embodiments of the present invention will be described in detail with reference to the accompanying drawings. The following detailed description with reference to the attached drawings illustrates preferred embodiments of the present invention rather than illustrating only embodiments that may be implemented according to embodiments of the present invention. The following detailed description includes details in order to provide a thorough understanding of the present invention, but the present invention does not require all of these details. In the present invention, embodiments described hereinafter are not intended to be respectively used independently. Multiple embodiments or all embodiments may be used together, and specific embodiments may be used in combination.

Most of terms used in the present invention are selected from general ones widely used in the art, but some terms are optionally selected by an applicant and meanings thereof are described in detail in the following description as needed. Accordingly, the present invention should be understood based on the intended meaning of the term rather than a simple name or meaning of the term.

The present invention relates to a V2X communication device, and the V2X communication device may be included in an Intelligent Transport System (ITS) to perform all or some of functions of the ITS system. The V2X communication device may perform communication with a vehicle and a vehicle, a vehicle and an infrastructure, a vehicle and a bicycle, and mobile devices. The V2X communication device may be abbreviated to a V2X device. In an embodiment, the V2X device may correspond to an On Board Unit (OBU) of a vehicle or may be included in an OBU. The V2X device may correspond to a Road Side Unit (RSU) of an infrastructure or may be included in an RSU. Alternatively, the V2X communication device may correspond to an ITS station or may be included in an ITS station. In an embodiment, the V2X device may operate in a Wireless Access In Vehicular Environments (WAVE) system of IEEE 1609.1 to 4.

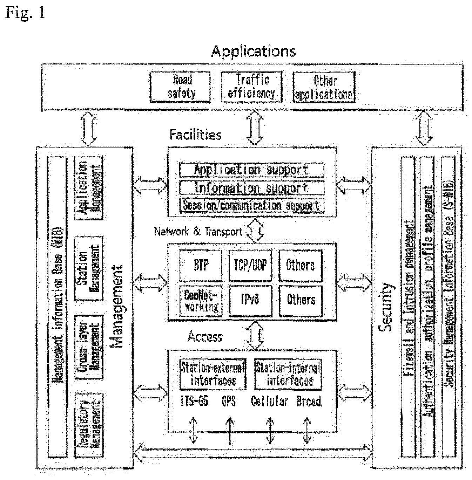

FIG. 1 illustrates a reference architecture of an Intelligent Transport System (ITS) station according to an embodiment of the present invention.

In the architecture of FIG. 1, two end vehicles/users may communicate with a communication network, and such communication may be performed through a function of each layer of the architecture of FIG. 1. For example, when a message between vehicles is communicated, in a transmitting vehicle and an ITS system thereof, by passing through each layer below one layer, data may be transferred, and in a receiving vehicle and an ITS system thereof, by passing through each layer above one layer, data may be transferred. A description of each layer of the architecture of FIG. 1 is as follows.

Application layer: the application layer may implement and support various use cases. For example, the application may provide road safety, efficient traffic information, and other application information.

Facilities layers: the facilities layer may support to effectively realize various use cases defined at the application layer. For example, the facilities layer may perform application support, information support, and session/communication support.

Networking & Transport layer: the networking/transport layer may constitute a network for vehicle communication between homogenous/heterogenous networks by using various transport protocols and network protocols. For example, the networking/transport layer may provide Internet access and routing using an Internet protocol such as TCP/UDP+IPv6. Alternatively, the networking/transport layer may constitute a vehicle network using a geographical position based protocol such as Basic Transport Protocol (BTP)/GeoNetworking.

Access layer: the access layer may transmit a message/data received from a superordinate layer through a physical channel. For example, the access layer may perform/support data communication based on IEEE 802.11 and/or 802.11p standard based communication technology, ITS-G5 wireless communication technology based on IEEE 802.11 and/or 802.11p standard physical transmission technology, 2G/3G/4G(LTE)/5G wireless cellular communication technology including satellite/broadband wireless mobile communication, broadband terrestrial digital broadcasting technology such as DVB-T/T2/ATSC, GPS technology, and IEEE 1609 WAVE technology.

ITS architecture may further include a management layer and a security layer.

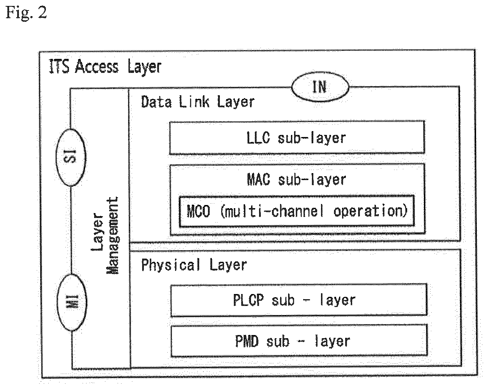

FIG. 2 illustrates an ITS access layer according to an embodiment of the present invention.

FIG. 2 illustrates in more detail the ITS Access Layer of the ITS system of FIG. 1. The access layer of FIG. 2 may include a data link layer, a physical layer, and layer management. The access layer of FIG. 2 has characteristics similar to or identical to an OSI 1 layer (physical layer) and an OSI 2 layer (data link layer).

The data link layer may include a Logical Link Control (LLC) sub-layer, a Medium Access Control (MAC) sub-layer, and a Multi-channel operation (MCO) sub-layer. The physical layer may include a Physical Layer Convergence Protocol (PLCP) sub-layer and a Physical Medium Access (PMD) sub-layer.

In order to enable a superordinate network layer to use a physical line between adjacent nodes (or between vehicles) having noise, the data link layer may convert the physical line into a communication channel having no transmission error. The data link layer performs a function of transmitting/transporting/transferring a 3-layer protocol, a framing function of dividing and grouping data to transmit into a packet (or frame) as a transmission unit, a flow control function of compensating a speed difference between the sending side and the receiving side, and a function of detecting and modifying or retransmitting a transmission error. Further, the data link layer performs a function of giving a sequence number to a packet and an ACK signal in order to avoid to erroneously confuse the packet or the ACK signal and a function of controlling setting, maintaining, short-circuit, and data transmission of a data link between network entities. Furthermore, such a data link layer may include a logical link control (LLC) sub-layer and a medium access control (MAC) sub-layer based on IEEE 802 standard.

A main function of the LLC sub-layer is to enable to use several different sub-MAC sub-layer protocols to allow communication unrelated to topology of a network.

The MAC sub-layer may control occurrence of collision/contention between vehicles when several vehicles (or nodes or a vehicle and peripheral devices) use a shared medium. The MAC sub-layer may format a packet transferred from a superordinate layer to correspond to a frame format of the physical network. The MAC sub-layer may perform addition and identification functions of a sender address/recipient address, carrier detection, collision detection, and fault detection on a physical medium.

The physical layer: the physical layer may define an interface between a node and a transmission medium to a lowest layer on an ITS layer structure and perform modulation, coding, and mapping of a transmission channel to a physical channel for bit transmission between data link layer entities. Further, the physical layer performs a function of notifying the MAC sub-layer whether a wireless medium is being used (busy or idle) through carrier sense and clear channel assessment (CCA). Furthermore, such a physical layer may include a physical layer convergence protocol (PLCP) sub-layer and a physical medium access (PMD) sub-layer based on IEEE standard.

The PLCP sub-layer performs a function of connecting a data frame with the MAC sub-layer. By attaching a header to the received data, the PLCP sub-layer enables to operate the MAC sub-layer regardless of physical characteristics. Therefore, in the PLCP frame, a format thereof may be defined differently according to various different wireless LAN physical layer standards.

A main function of the PMD sub-layer may perform carrier/RF modulation of frames received from the PLCP sub-layer and then transmit the frames to a wireless medium according to transmission and reception transmission related standards.

Layer management performs a function of managing and servicing information related to an operation and security of an access layer. Information and service are bilaterally transferred and shared through MI (interface between management entity and access layer or MI-SAP) and SI (interface between security entity and access layer or SI-SAP). Two-way information and service transfer between the access layer and a network/transport layer is performed by IN (or IN-SAP).

The MCO sub-layer may provide various services such as a safety service and other services, i.e., a non-safety service other than the safety service using a plurality of frequency channels. By effectively distributing a traffic load in a particular frequency channel to other channels, the MCO sub-layer may minimize collision/contention when communicating between vehicles in each frequency channel. The MCO sub-layer may perform multi-channel access and operation to be described hereinafter based on setting received from the superordinate layer.

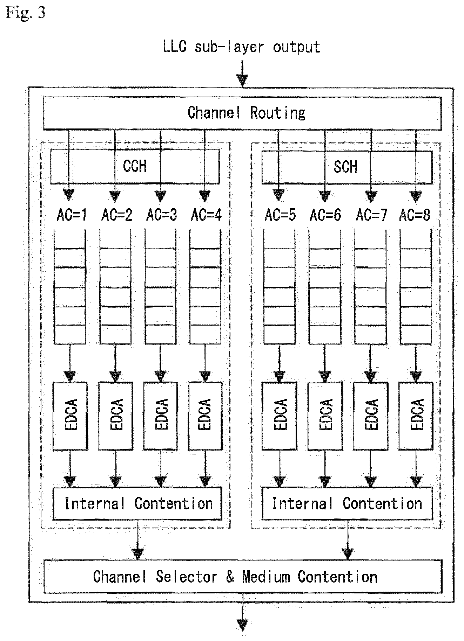

FIG. 3 illustrates a conceptual internal architecture of a MAC sub-layer that performs a multi-channel operation (MCO) according to an embodiment of the present invention.

In an embodiment, the architecture of FIG. 3 may correspond to a MCO block of FIG. 2. An MCO structure of FIG. 3 may include channel coordination in which channel access is defined, channel routing that defines an operation process of a management frame and overall data between PHY-MAC layers, Enhanced Dedicated Channel Access (EDCA) that determines and defines a priority of a transmission frame, and a data buffer (or queue) that stores a frame received from a superordinate layer. A channel coordination block is not shown in FIG. 3, and channel coordination may be performed by an entire MAC sub-layer of FIG. 3.

Channel coordination: in an embodiment, channel access to the Control Channel (CCH) and the Service Channel (SCH) may be controlled. Channel access coordination will be described later. In an embodiment, a Wave Short Message (WSM) may be transmitted to the CCH, and the WSM and/or IP data may be transmitted to the SCH.

A data buffer (queue): The data buffer may store a data frame received from a superordinate layer according to a defined Access Category (AC). In the embodiment of FIG. 3, a data buffer may be provided for each AC.

Channel routing: the channel routing block may transfer data input from a superordinate layer to the data buffer. For a transmission request of the superordinate layer, a transmission operating parameter such as a channel number, transmission power, and a data rate for the above-described channel coordination and frame transmission may be called.

EDCA: The EDCA is a contention based medium access method of dividing traffic into four Access Categories (AC) according to a type of traffic with a method of guranteeing a QoS in an existing IEEE 802.11e MAC layer to give differentiated priorities to each category and allocating differentiated parameters for each AC to give more transmission opportunities to traffic of a high priority. For transmission of data including a priority, an EDCA block may specify 8 priorities of 0 to 7 and map data arriving at the MAC layer to four ACs according to the priority.

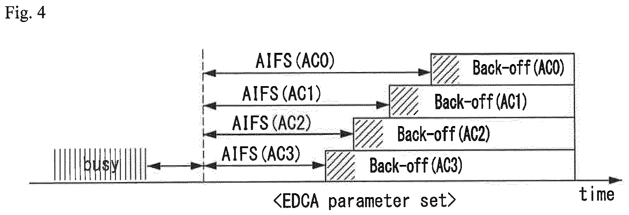

FIG. 4 illustrates the relationship between a user priority of EDCA and an Access Category (AC) according to an embodiment of the present invention.

The relationship between a user priority of the EDCA and the AC is shown in FIG. 4. In FIG. 4, the higher the AC number, the higher the priority. All ACs have each transmission queue and AC parameter and a difference of priorities between ACs is determined based on differently set AC parameter values. The differently set AC parameter value is connected to back-off to have different channel access order. Each of parameter values of the corresponding AC uses AIFS[AC], CWmin[AC], and CWmax[AC], and here, an Arbitration Inter-Frame Space (AIFS) is a minimum time for determining whether a channel is idle before transmission. When AIFS[AC] and CWmin[AC] have a small value, AIFS[AC] and CWmin[AC] have a high priority and thus channel access delay is shortened and more bands may be thus used in a given traffic environment.

When a collision between stations occurs while transmitting a frame, a transmitter generates a new back-off counter. Transmission queue for four ACs defined to IEEE 802.11 MAC individually contends for wireless medium access within a single station, as shown in FIG. 4. Because each AC has an independent back-off counter, a virtual collision may occur. When there are two or more ACs in which back-off is simultaneously completed, data of an AC having a highest priority are first transmitted, and other ACs increase a CW value to again update the back-off counter. Such a collision solving process is referred to as a virtual collision process. Further, when transmitting data through the transmission opportunity (TXOP), EDCA enables access to the channel. Because one frame is too long, when one frame cannot be transmitted for TXOP of one time, the one frame may be divided into smaller frames and be transmitted.

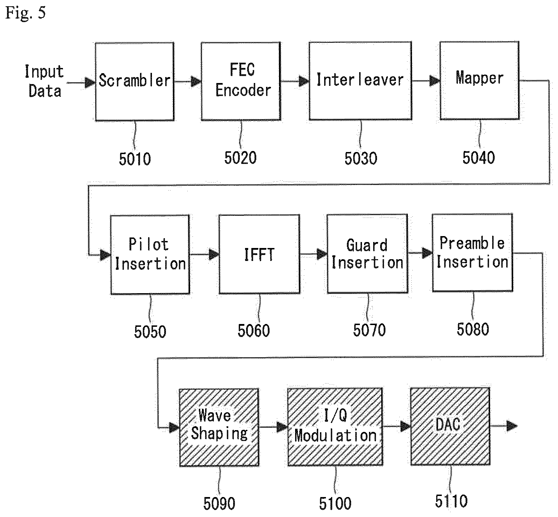

FIG. 5 illustrates a physical layer configuration of a V2X transmission device according to an embodiment of the present invention.

In an embodiment, FIG. 5 illustrates a physical layer signal processing block of IEEE 802.11 or ITS-G5. However, FIG. 5 illustrates a physical layer configuration according to an embodiment of the present invention and is not limited only to the above-described transmission standard technology.

A physical layer processor of FIG. 5 may include a Physical layer Convergence Protocol (PLCP) sub-layer baseband signal processing part including at least one of a scrambler 5010, an FEC encoder 5020, an interleaver 5030, a mapper 5040, a pilot insertion 5050, an IFFT 5060, a guard insertion 5070, and a preamble insertion 5080 and a Physical Medimu Dependant (PMD) sub-layer RF band signal processing part including at least one of a wave shaping 5090, an I/Q modulation 5100, and a DAC 5110. A function description of each block is as follows.

The scrambler 5010 may perform an XOR operation of input bit stream with Pseudo Random Binary Sequence (PRBS) to randomize the input bit stream. In order for the receiving side to correct an error on a transmission channel, the FEC encoder 5020 may add redundancy to transmission data. The interleaver 5030 may interleave an input data/bit string based on an interleaving rule in order to respond to a burst error. In an embodiment, when deep fading or erasure is applied to a QAM symbol, interleaved bits are mapped to each QAM symbol and thus an error may be prevented from occurring in continued bits of entire codeword bits. The mapper 5040 may allocate an input bit word to single constellation. The pilot insertion 5050 inserts a reference signal into a predetermined position of a signal block. By using such a reference signal, the receiver may estimate a channel distortion phenomenon such as channel estimation, frequency offset, and timing offset.

In order to enhance transmission efficiency and flexibility in consideration of characteristics of the transmission channel and a system structure, the IFFT 5060, i.e., an inverse waveform transform block may convert an input signal. In an embodiment, in the case of an OFDM system, the IFFT 5060 may convert a signal of a frequency domain to a signal of a time domain using an inverse FFT operation. The IFFT 5060 may not be used or may be omitted in the case of a single carrier system. In order to minimize an influence of delay spread of the transmission channel, the guard insertion 5070 may insert a guard interval between adjacent signal blocks. In an embodiment, in the case of an OFDM system, the guard insertion 5070 may insert a click prefix into a guard interval segment. The preamble insertion 5080 may insert a predetermined type signal, i.e., a preamble into a transmission signal for a transmission and reception period so that the receiver may quickly and efficiently detect a target signal. In an embodiment, in the case of an OFDM system, the preamble insertion 5080 may define a signal block/signal frame including a plurality of OFDM symbols and insert a preamble symbol into a start portion of the signal block/signal frame.

The wave shaping 5090 may perform waveform processing of an input baseband signal based on channel transmission characteristics. In an embodiment, in order to obtain a reference of out-of-band emission of the transmission signal, the waveform shaping 5090 may perform square-root-raised cosine (SRRC) filtering. In the case of a multi-carrier system, the waveform shaping 5090 may not be used or may be omitted. The I/Q modulation 5100 may perform in-phase and quadrature modulation. The Digital to Analog Converter (DAC) 5110 may convert and output an input digital signal to an analog signal. An output analog signal may be transmitted through an output antenna.

Each of the blocks illustrated and described in FIG. 5 may be omitted or replaced by another block having similar or identical functions.

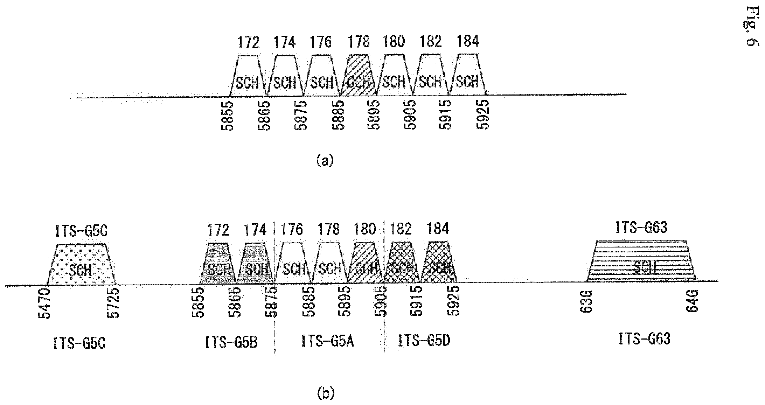

FIG. 6 illustrates multi-channel allocation used for an ITS system operation according to an embodiment of the present invention.

FIG. 6(a) illustrates US spectrum allocation for an ITS, and FIG. 6(b) illustrates EP spectrum allocation for an ITS.

As shown in FIG. 6, the United States and Europe have seven frequencies (each frequency bandwidth: 10MHz) in 5.9GHz band (5.855 to 5.925GHz). Seven frequencies may include one CCH and 6 SCHs. As shown in FIG. 6(a), in the United States, the CCH is allocated to a channel number 178 and as shown in FIG. 6(b), in European, the CCH is allocated to a channel number 180.

In Europe, in order to provide a service that is time-sensitive and having a large data capacity, it is considered to additionally use an ITS-G63 band in a superordinate frequency band based on 5.9 GHz and it is considered to use an ITS-G5 band in a subordinate frequency band. In order to provide a high quality of service by appropriately allocating the service to various multi-channels in such an environment, development of an efficient multi-channel operation method is required.

The CCH indicates a radio channel used for exchange of a management frame and/or a WAVE message. The WAVE message may be a WAVE short message (WSM). The SCH is a radio channel used for providing a service and represents a random channel instead of the CCH. In an embodiment, the CCH may be used for communication of a Wave Short Message Protocol (WSMP) message or communication of a system management message such as a WAVE Service Advertisement (WSA). The SCH may be used for general-purpose application data communication, and communication of such general-purpose application data may be coordinated by service related information such as the WSA.

Hereinafter, the WSA may be also referred to as service advertisement information. The WSA is an application may provide information including announcement of availability of an application-service. A WSA message may identify and describe an application service and a channel in which the service is accessible. In an embodiment, the WSA may include a header, service information, channel information, and WAVE routing advertisement information.

Service advertisement information for service access may be a periodic message. In an embodiment, Co-operative Awareness Messages (CAM) may be periodic messages. The CAM may be broadcasted periodically by a facilities layer. In an embodiment, the CAM may also be transmitted by the RSU, and in such a case, the CAM may be transmitted and received in an RSU interval hereinafter.

Decentralized Environmental Notification Messages (DENM) may be event messages. The event message may be triggered by detection of the event to be transmitted. Service messages may be transmitted to manage a session. In the following embodiments, the event message may include a security message/information. The service message may include a non-safety message/information.

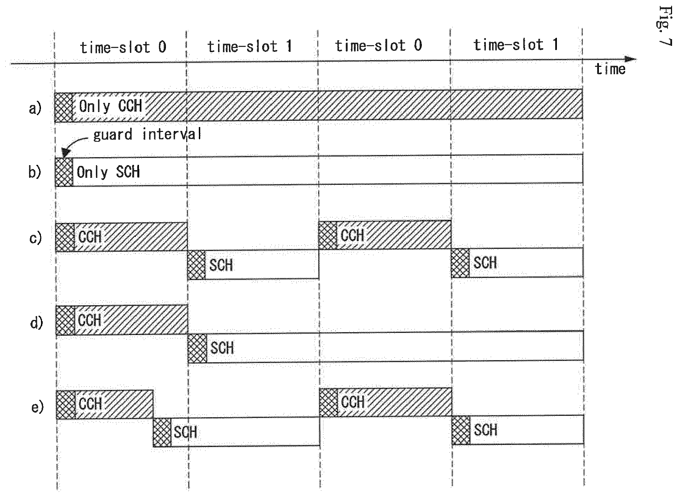

FIG. 7 illustrates a channel coordination mode of a multi-channel operation according to an embodiment of the present invention.

FIG. 7 represents (a) a continuous mode, (b) an altering mode, (c) an extended mode, and (d) an immediate mode as channel coordination of a multi-channel operation.

A V2X device may access to at least one channel. In an embodiment, a single-radio device may exchange data in a SCH channel while monitoring a CCH channel. For this purpose, a channel interval should be specified, and FIG. 7 illustrates such a channel interval, i.e., time slot allocation. Radio channel altering may be related to a common time base to be operated based on the synchronization interval. The synchronization interval may include a CCH interval and an SCH interval. During the CCH interval, traffic may be exchanged at the CCH. A single-radio device participating to an application-service may be switched to the SCH during the SCH interval. Each of the CCH interval and the SCH interval may include a guard interval. Each interval may be started at the guard interval.

In an embodiment, exchange of multi-channel operation information and security related service information may be performed in the CCH during the CCH interval. Further, a negotiation for information exchange between a service provider and a user may be performed in the CCH during the CCH interval. A hardware timing operation for channel change of the V2X device may be initiated by a synchronization signal obtained by Universal Time Coordinated (UTC) estimation. Channel synchronization may be performed in every Pulse Per second (PPS) segment based on the UTC.

In an embodiment, FIG. 7 illustrates a method in which two MAC layers divide a time in one physical layer to use alternately a CCH and each different channel mode as a channel coordination method of a multi-channel operation (MCO) described in IEEE 1609.4.

(a) & (b) continuous mode: The continuous mode is a mode in which each vehicle or all vehicles operate regardless of a time division criteria such as a time slot/CCH interval/SCH interval of FIG. 6. In the continuous mode, the V2X devices may continuously receive operation information and safety related service information of multi-channels in the designated CCH or SCH or may perform information exchange between the service provider and the user.

(c) The altering mode: in the altering mode, each vehicle or all vehicles may receive operation information and security related services/information of multiple channels during the CCH interval or may perform a negotiation process for information exchange between service providers/users. In the altering mode, each vehicle or all vehicles perform service/information exchange between the service provider and the user during the SCH interval. In the altering mode, the V2X device may communicate alternately through the CCH and the SCH during the preset CCH interval and SCH interval.

(d) The extended mode: in the extended mode, communication of the CCH interval and the SCH interval may be performed as in the altering mode. However, service/information exchange of the SCH interval may be performed even in the CCH interval. In an embodiment, the V2X device in the extended mode may transmit and receive control information during the CCH interval, and when the V2X device enters the SCH interval, the V2X device may maintain the SCH interval until exchange of service/information ends.

(e) The immediate mode: in the immediate mode, communication of the V2X device may be performed as in the altering mode and/or the extended mode. However, when a negotiation for information exchange is completed during the CCH interval, the V2X device in the immediate mode may immediately switch a channel to a specified SCH instead of waiting for the end of the CCH interval to initiate information exchange.

Hereinafter, in order to more efficiently provide and operate a safety management service and other services in the MCO, a method of disposing a time slot in the CCH will be described.

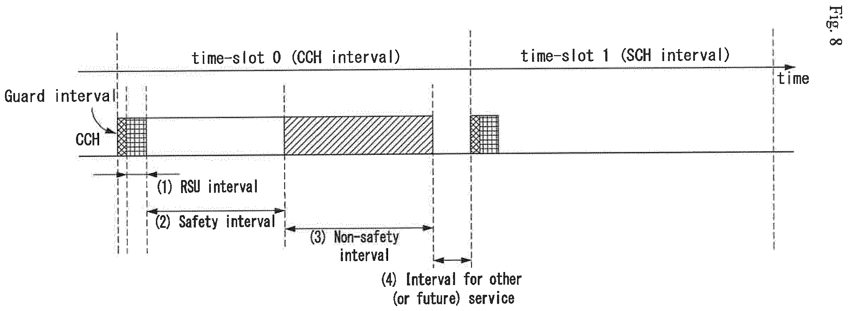

FIG. 8 illustrates a time slot configuration method for a multi-channel operation according to an embodiment of the present invention.

As described with reference to FIG. 7, channel coordination of the MCO may be performed in a time slot basis. That is, a particular time slot may be allocated to a CCH interval for a CCH or a particular time slot may be allocated to an SCH interval for a SCH. However, as devices and protocol for V2X communication are subdivided, time slot allocation of FIG. 7 may not satisfy service needs or may not guarantee sufficient safety. Therefore, the present invention proposes a subdivided time slot structure and a communication method using the same. A time segment included in the CCH interval and the SCH interval may be referred to as a time slot or a sub-time slot. The time slot or the sub-time slot may also be referred to as a time interval. The present invention proposes a method of dividing and using the CCH interval into sub-intervals according to the type of the service.

Hereinafter, a time slot allocation method in the CCH interval will be described.

(1) RSU interval (RSU time slot)

The CCH interval may include an RSU interval.

The RSU interval may be allocated for periodic/non-periodic signal transmission/reception with the RSU. In an embodiment, the V2X device may periodically/non-periodically receive a signal or a service signal representing multi-channel use and a channel busy ratio in each channel from the RSU. When the RSU signal/service exists, the RSU interval may be allocated, and when the RSU signal/service does not exist, the RSU interval may not be allocated. The V2X device may determine whether the RSU signal/service exists using an ID allocated to the RSU signal/service. The V2X device may determine whether the RSU signal/service exists by communication with periphery vehicles and other infrastructure.

In the embodiment of FIG. 8, the RSU interval may be allocated just behind the guard interval. Further, the RSU interval may be allocated to be included in the CCH interval, may be allocated to be included in the SCH interval, or may be allocated to include in both the CCH interval and the SCH interval. The RSU interval may be included in at least one of the CCH interval or the SCH interval.

(2) Safety interval (safety time slot)

The safety interval may be allocated for transmission/reception of operation information and safety related service/information of multiple channels with peripheral vehicles or infrastructures. In an embodiment, a safety interval having high importance compared to other services other than safety may be allocated in front of a non-safety interval. In an embodiment, a safety-related message of event messages may be transmitted and received in the safety interval. A safety-related message of periodic messages may also be transmitted and received in the safety interval.

When a safety-related service is provided, by avoiding contention with a communication signal for a non-safety service, a divided time slot operation between the safety-related service and other services can improve safety reliability. That is, by avoiding contention between a control signal for information exchange between a service provider and a user for the non-safety service and a control signal for a safety-related service, transfer of safety related information can be prevented from being delayed.

As shown in FIG. 8, when the RSU interval is valid, the safety interval may be positioned behind the RSU interval. When the RSU interval is not valid, the safety interval may be positioned behind the guard interval.

(3) Non-safety interval (non-safety time slot)

The non-safety interval may be allocated for communication between a service provider and a user for a non-safety service. That is, the non-safety interval may be provided to exchange control signals for information exchange between a service provider and a user. A service message of the above-described messages may be transmitted and received in the non-safety interval. In consideration that the non-safety interval has low importance, compared with the safety related service/information, the non-safety interval may be allocated to be positioned behind the safety interval.

(4) Interval for other (or future) service

The interval for other (or future) service may be referred to as a reserved interval. The reserved interval is an interval for a service that may be provided in the future and that is not defined until now. The reserved interval may be allocated or may not be allocated to an empty area. Whether the reserved interval is allocated may be transferred and determined through separate signaling information.

A position or order of the above-described interval may be changed according to an embodiment. In the SCH interval, a service signal determined by control signal exchange may be transmitted. However, according to an embodiment, the SCH interval may include at least one of an RSU interval, a safety interval, a non-safety interval, or a reserved interval. For example, a safety related signal having a very high priority may be transmitted and received through a safety interval allocated temporarily within the SCH interval.

The V2X communication device may transmit and receive a signal including data of an allocated service in the above each sub-interval.

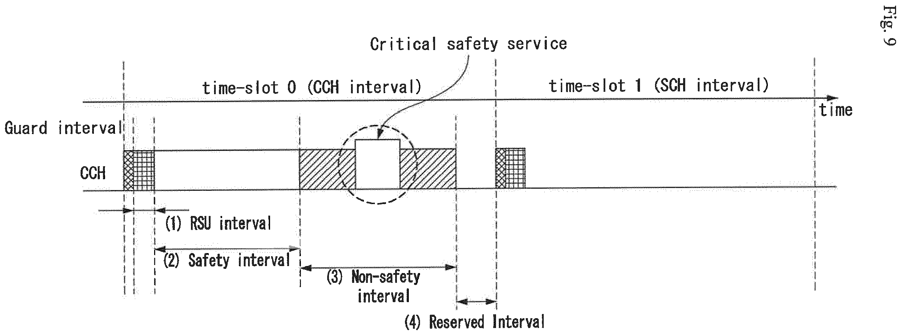

FIG. 9 illustrates a time slot configuration method for an MCO according to an embodiment of the present invention.

FIG. 9 illustrates an additional application embodiment of a time slot configuration of FIG. 8. As shown in FIG.

9, the CCH interval may include at least one of (1) an RSU interval, (2) a safety interval, (3) a non-safety interval, or (4) a reserved interval.

In an embodiment of FIG. 9, a critical security service may be transmitted and received even in (3) the non-safety interval. The security service should be transmitted in (2) the safe interval. However, in view of characteristics of vehicle communication, a safety service may occur that is very important and should be urgently transferred. Such a safety service having very high importance/priority may be referred to as a critical safety service. Even in (3) the non-safety interval, transmission of the critical safety service may be allowed.

Top priority importance may be given to such an emergency safety related service. Further, in the emergency safety service, a carrier-sensing multiple access/collision avoidance (CSMA-CA) back-off value may be set as a minimum value. In an embodiment, a time segment in which a critical safety service is transmitted may be referred to as a critical safety interval. That is, when an emergency situation has occurred, a critical safety interval may be included in (3) the non-safety interval and thus critical safety service related data/information may be transmitted and received.

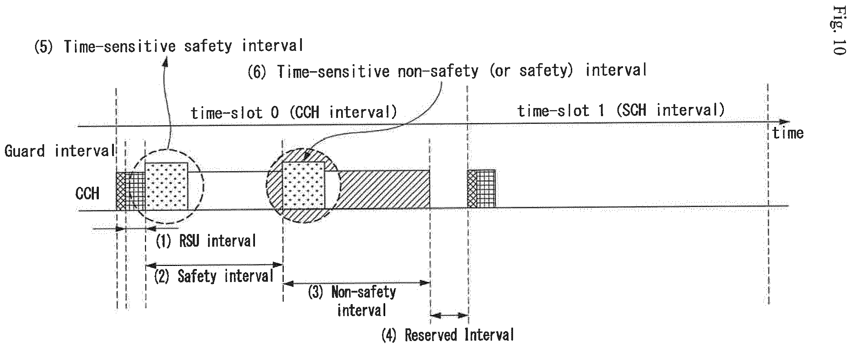

FIG. 10 illustrates a time slot configuration method for an MCO according to an embodiment of the present invention.

FIG. 10 illustrates an additional application embodiment of the time slot configuration of FIG. 8. As shown in FIG. 10, the CCH interval may include at least one of (1) an RSU interval, (2) a safety interval, (3) a non-safety interval, or (4) a reserved interval.

In an embodiment of FIG. 10, (2) the safety interval and (3) the non-safety interval may include an interval for transmitting and receiving a service in which provision should be completed within a limited time. That is, a dedicated time slot may be additionally allocated to a service having a very high priority. Top priority importance may be given to and a minimum CSMA/CA back off value may be set to a service in which provision should be completed within a limited time. However, even in such a case, contention for transmission may occur. Therefore, in order to avoid contention between services, a specific time slot may be allocated to a time-sensitive service.

As shown in FIG. 10, in order to transmit and receive a safety service having a very high priority, (5) a time-sensitive safety interval may be included in (2) the security interval. Alternatively, (6) a time-sensitive non-safety (or safety) interval may be included in (3) the non-safety interval. Such time-sensitive intervals (5) and (6) may be allocated to the front of (2) the safety interval or (3) the non-safety interval.

(6) The time-sensitive non-safety interval may be allocated so that a control signal for information exchange between a service provider and a user for providing a non-security service in which provision should be completed within a limited time is transmitted in the foremost of (3) the non-safety interval. For exchange of a control signal for providing a security service in which provision should be completed within a limited time, (5) and (7) time-sensitive safety intervals may be allocated. (5) and (7) time-sensitive safety intervals may be allocated to the foremost of (2) the safety interval or the foremost of (3) the non-safety interval.

Allocation of the above-described time interval may be previously determined or may be set variably. Whether a safety interval and a non-safety interval are included or a length of a safety interval and a non-safety interval may be instructed in a superordinate layer such as an application layer. That is, a value related to the safety interval and the non-safety interval is predefined/set from a superordinate layer to be stored at MAC sub-layer Management Entity (MLME) extension (MLMEX) of a management plane through an MLMEX Service Access Point (SAP) of the MAC layer. A method of setting a value of the safety interval and the non-safety interval will be described hereinafter.

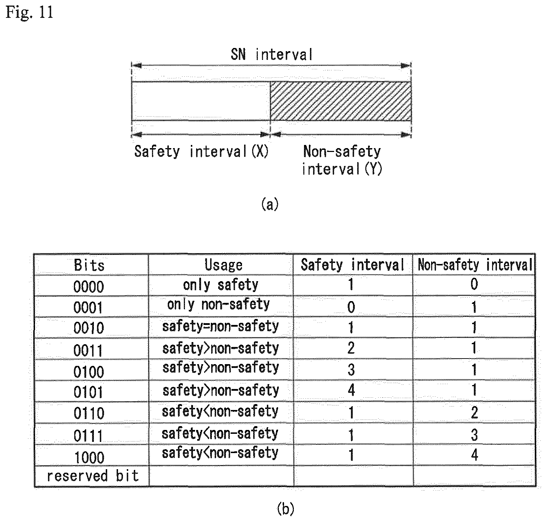

FIG. 11 illustrates a time interval adjustment method according to an embodiment of the present invention.

In the above-described embodiment, the CCH interval may include a safety interval or a non-safety interval. As shown in FIG. 11(a), a time slot including a safety interval and a non-safety interval may be referred to as SN interval. The SN interval may be defined as the sum of a safety interval X and a non-safety interval Y.

A rate of the safety interval and the non-safety interval may be defined and provided, as in the interval table of FIG. 11(b). Such an interval table may be defined using at least one of bits, usage, a safe interval (ratio), and a non-security interval (ratio).

The safety interval X and the non-safety interval Y each may be calculated as shown below using an SN interval and a ratio provided in the table of FIG. 11 (b).

$$\text{Safety interval X} = \text{SN interval} \times \text{Sr}/(\text{Sr} + \text{Nr})$$

$$\text{Non-safety interval Y} = \text{SN interval} \times \text{Nr}/(\text{Sr} + \text{Nr})$$

Sr represents a safety interval ratio of FIG. 11(b), and Nr represents the above-described non-safety interval ratio.

Bit values of FIG. 11(b) may be referred to as interval information/values. Interval information may represent whether at least one of a security interval or a non-security interval exists in the CCH interval and a ratio of each interval. By using 0 as a ratio value of one interval, it may be indicated whether the corresponding interval exists.

As shown in FIG. 11(b), when a value of interval information is 0000, a CCH interval includes only a safety interval, and when a value of interval information is 0001, a CCH interval may include only a non-safety interval. For example, when an SN interval is 12μs and a value of interval information is 0011, the safety interval may be 8μs = 12 × (2/3), and the non-safety interval may be 4μs = 12 × (1/3).

Interval information of FIG. 11(b) may be signaled. That is, interval information of FIG. 11(b) may be included in a header of a signal transmitted in the CCH interval.

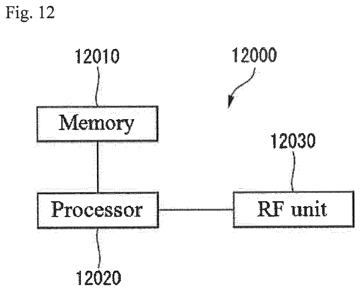

FIG. 12 is a block diagram illustrating a V2X communication device according to an embodiment of the present invention.

In FIG. 12, a V2X communication device 12000 may include a memory 12010, a processor 12020, and a radio frequency (RF) unit 12030. As described above, the V2X communication device may be an On Board Unit (OBU) or a Road Side Unit (RSU) or may be included in the OBU or the RSU.

The RF unit 12030 may be connected to the processor 12020 to transmit/receive a radio signal. The RF unit 12030 may up-convert a band of data received from the processor 32020 to a transmission and reception band to transmit a signal. The RF unit 12030 may include subblocks of FIG. 5.

The processor 12020 may be connected to the RF unit 12030 to implement a physical layer and/or a MAC layer according to an ITS system or a WAVE system. The processor 12020 may be configured to perform operations according to various embodiments of the present invention with reference to the above-described drawings and description. Further, at least one of modules, data, programs, or software for implementing an operation of the V2X communication device 12000 according to various embodiments of the present invention may be stored in the memory 12010 and be executed by the processor 12020.

The memory 12010 is connected to the processor 12020 to store various information for driving the processor 12020. The memory 12010 may be included inside the processor 12020 or may be installed outside the processor 12020 to be connected to the processor 12020 by a known means.

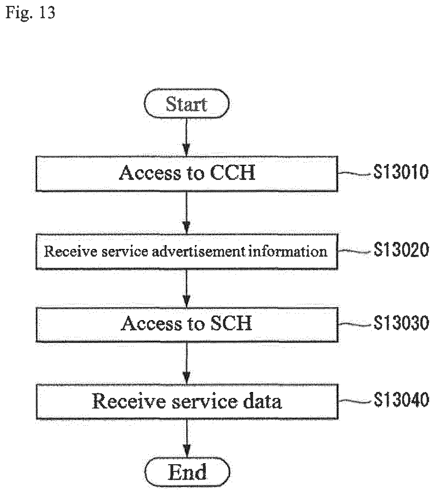

A specific configuration of the V2X communication device 12000 of FIG. 12 may be implemented such that various embodiments of the present invention are independently applied or two or more embodiments are together applied. A multi-channel operation method of the V2X communication device 12000 of FIG. 12 may be applied to all of the description of the above-described specification as well as a description related to FIG. 13.

FIG. 13 is a flowchart illustrating a method of operating multi-channels of a V2X communication device according to an embodiment of the present invention.

The V2X communication device may access to the CCH (S13010). As described above, the CCH is a channel for exchanging system management information or service advertisement information. The V2X communication device may receive the service advertisement information through the accessed channel control (S13020). The service advertisement information may include information necessary for receiving the provided service. In an embodiment, the service advertisement information may include SCH information in which the service is provided.

In an embodiment, the service advertisement information may identify/describe a service and a channel in which the service is provided. The service advertisement information may include at least one of a header, service information, channel information, or routing advertisement information. Channel information of the service advertisement information may provide information on the SCH that should access to join to a service as a channel number. The service information may identify/describe at least one of an attribute, a configuration, and availability of the provided service.

The V2X communication device may access to a SCH (S13030). The V2X communication device may access to the SCH based on the received service advertisement information. As described above, the SCH is a channel for transmitting and receiving application/service data for providing a service. The V2X communication device may receive service data through the accessed SCH (S13040). In order words, (via) communication in the CCH may be performed in a CCH interval, which is a time slot for control information communication, and communication in the SCH may be performed in a SCH interval, which is a time slot for service information communication. The V2X communication device may access to the SCH instructed by channel information included in the above-described service advertisement information to join to the service.

CCH access may be performed during a CCH interval, which is a time slot for control information communication, and SCH access may be performed during a SCH interval, which is a time slot for service information communication. The CCH interval and the SCH interval may be allocated to the embodiment of FIG. 7. Time slot allocation in the CCH interval may be applied to the embodiments described with reference to FIGS. 8 to 11.

The CCH interval may include at least one of a guard interval, a security interval that communicates safety related service data, or a non-safety interval that communicates non-safety related service data. The CCH interval may further include an RSU interval that communicates with a Road Side Unit (RSU).

The CCH interval may further include at least one of a time-sensitive safety interval or a time-sensitive non-safety interval, the time-sensitive safety interval may be optionally included in a safety interval or a non-safety interval, and the time-sensitive non-safety interval may be optionally included in the non-safety interval. Communication of a critical safety message may be allowed during the non-safety interval. Communication of the safety interval or the non-safety interval may be performed based on interval information representing whether the safety interval or the non-safety interval exists and a ratio between the safety interval or the non-safety interval.

The V2X communication device may transmit or receive security related service data during the safety interval. The V2X communication device may transmit or receive non-safety related service data during a non-safety interval. The V2X communication device may perform data reception according to channel change and interval based on the above-described interval information. The V2X communication device may quickly process data received in the corresponding interval based on the above-described interval information.

In FIG. 13, the V2X communication device may correspond to a user equipment that receives a service. However, the V2X communication device is not limited to a user equipment. The V2X communication device may correspond to a provider device that provides a service. When the V2X communication device is a provider, the flowchart of FIG. 13 may be applied as follows.

The V2X communication device may access to the CCH and transmit service advertisement information in the CCH. The V2X communication device may access to the SCH to transmit service data from the SCH. The V2X communication device as a provider device always accesses to a plurality of channels to perform communication. That is, in the V2X communication device as a provider, CCH access and SCH access steps may be omitted, and the V2X device may transmit service data from the SCH while transmitting service advertisement information from the CCH.

In the above-described embodiments, elements and characteristics of the present invention have been combined in predetermined forms. Each of the elements or characteristics should be considered to be optional unless otherwise described explicitly. Each of the elements or characteristics may be implemented in such a way as to be not combined with other elements or characteristics. Further, some of the elements and/or the characteristics may be combined to configure an embodiment of the present invention. The order of operations described in the embodiments of the present invention may be changed. Some of the elements or characteristics of an embodiment may be included in another embodiment or may be replaced with corresponding elements or characteristics of another embodiment. It is evident that an embodiment may be configured by combining claims having no explicit citation relation in the claims or may be included as a new claim by amendments after filing an application.

The embodiment according to the present invention may be implemented by various means, for example, hardware, firmware, software or a combination thereof. In the case of implementations by hardware, an embodiment of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, and microprocessors.

In the case of an implementation by firmware or software, the embodiment of the present invention may be implemented in the form of a module, procedure or function for performing the above-described functions or operations. A software code may be stored in the memory and driven by the processor. The memory may be positioned inside or outside the processor and may exchange data with the processor by various known means.

It is evident to those skilled in the art that the present invention may be materialized in other specific forms without departing from essential characteristics thereof. Accordingly, the detailed description should not be construed as being limitative from all aspects, but should be construed as being illustrative. The scope of the present invention should be determined by reasonable analysis of the attached claims, and all changes within the equivalent range of the present invention are included in the scope of the present invention.

[Mode for carrying out the invention]

It will be apparent to those skilled in the art that various modifications and variations may be made in the present invention without departing from the spirit or scope of the present invention. Accordingly, it is intended that the present invention cover modifications and variations thereof provided they come within the scope of the appended claims and their equivalents.

In this specification, all of device and method inventions are described and a description of all of device and method inventions may be complementarily applied.

Various embodiments have been described in the best mode for carrying out the present invention.

[Industrial Applicability]

The present invention is used in a series of broadcast signal providing field.

It will be apparent to those skilled in the art that various modifications and variations may be made in the present invention without departing from the spirit or scope of the present invention. Accordingly, it is intended that the present invention cover modifications and variations thereof provided they come within the scope of the appended claims and their equivalents.

**Claims**

1. A method of operating a multi-channel of a V2X communication device, the method comprising:

   accessing to a control channel (CCH) for service advertisement information exchange;
   receiving the service advertisement information via the accessed CCH;
   accessing to a service channel (SCH) for transmission or reception of service data for providing the service based on the service advertisement information; and
   receiving the service data via the SCH,
   wherein (via) communication in the CCH is performed in a CCH interval, which is a time slot for control information communication, and communication in the SCH is performed in a SCH interval, which is a time slot for service information communication.

2. The method of claim 1, wherein the CCH interval comprises at least one of a guard interval, a security interval that communicates safety related service data, or a non-safety interval that communicates non-safety related service data.

3. The method of claim 2, wherein the CCH interval further comprises an RSU interval that communicates with a Road Side Unit (RSU).

4. The method of claim 2, wherein the CCH interval further comprises at least one of a time-sensitive safety interval or a time-sensitive non-safety interval, wherein the time-sensitive safety interval is optionally included in the safety interval or the non-safety interval, and the time-sensitive non-safety interval is optionally included in the non-safety interval.

5. The method of claim 2, wherein communication of a critical safety message is allowed during the non-safety interval.

6. The method of claim 2, wherein communication of the safety interval or the non-safety interval is performed based on interval information representing whether the safety interval or the non-safety interval exists and a ratio between the safety interval and the non-safety interval.

7. A V2X communication device, comprising:

   a memory for storing data;
   a radio frequency (RF) unit for transmitting and receiving a radio signal; and
   a processor for controlling the RF unit,
   wherein the V2X communication device is configured to:

      access to a control channel (CCH) for service advertisement information exchange;
      receive the service advertisement information via the CCH;
      access to a service channel (SCH) for transmission or reception of service data for providing the service based on the service information; and
      receive the service data via the SCH,
      wherein (via) communication in the CCH is performed in a CCH interval, which is a time slot for control information communication, and communication in the SCH is performed in a SCH interval, which is a time slot for service information communication.

8. The V2X communication device of claim 7, wherein the CCH interval comprises at least one of a guard interval, a security interval that communicates safety related service data, or a non-safety interval that communicates non-safety related service data.

9. The V2X communication device of claim 8, wherein the CCH interval further comprises an RSU interval that communicates with a Road Side Unit (RSU).

10. The V2X communication device of claim 8, wherein the CCH interval further comprises at least one of a time-sensitive safety interval or a time-sensitive non-safety interval, wherein the time-sensitive safety interval is optionally included in the safety interval or the non-safety interval, and the time-sensitive non-safety interval is optionally included in the non-safety interval.

11. The V2X communication device of claim 8, wherein communication of a critical safety message is allowed during the non-safety interval.

12. The V2X communication device of claim 2, wherein communication of the safety interval or the non-safety interval is performed based on interval information representing whether the safety interval or the non-safety interval exists and a ratio between the safety interval and the non-safety interval.

Fig. 1

Fig. 2

ITS Access Layer

Data Link Layer — IN

LLC sub-layer

MAC sub-layer

MCO (multi-channel operation)

Physical Layer

PLCP sub - layer

PMD sub - layer

SI

MI

Layer Management

Fig. 3

LLC sub-layer output

```
┌─────────────────────────────────────────────────────────────┐
│  ┌─────────────────────────────────────────────────────────┐ │
│  │                   Channel Routing                        │ │
│  └─────────────────────────────────────────────────────────┘ │
│  ┌ ─ ─ ─ ─ ─ ─ ─ ─ ─ ─ ─ ─ ┐ ┌ ─ ─ ─ ─ ─ ─ ─ ─ ─ ─ ─ ─ ┐  │
│  │ ┌───────────────────────┐ │ ┌───────────────────────┐ │  │
│  │ │         CCH           │ │ │         SCH           │ │  │
│  │ └───────────────────────┘ │ └───────────────────────┘ │  │
│  │  AC=1  AC=2  AC=3  AC=4  │  AC=5  AC=6  AC=7  AC=8    │  │
│  │                           │                           │  │
│  │ ┌──┐ ┌──┐ ┌──┐ ┌──┐      │ ┌──┐ ┌──┐ ┌──┐ ┌──┐      │  │
│  │ │EDCA││EDCA││EDCA││EDCA│  │ │EDCA││EDCA││EDCA││EDCA│  │  │
│  │ └──┘ └──┘ └──┘ └──┘      │ └──┘ └──┘ └──┘ └──┘      │  │
│  │ ┌───────────────────────┐ │ ┌───────────────────────┐ │  │
│  │ │  Internal Contention  │ │ │  Internal Contention  │ │  │
│  │ └───────────────────────┘ │ └───────────────────────┘ │  │
│  └ ─ ─ ─ ─ ─ ─ ─ ─ ─ ─ ─ ─ ┘ └ ─ ─ ─ ─ ─ ─ ─ ─ ─ ─ ─ ─ ┘  │
│  ┌─────────────────────────────────────────────────────────┐ │
│  │        Channel Selector & Medium Contention             │ │
│  └─────────────────────────────────────────────────────────┘ │
└─────────────────────────────────────────────────────────────┘
```

Fig. 4

Fig. 5

Input
Data → Scrambler → FEC Encoder → Interleaver → Mapper

5010　　5020　　5030　　5040

Pilot Insertion → IFFT → Guard Insertion → Preamble Insertion

5050　　5060　　5070　　5080

Wave Shaping → I/Q Modulation → DAC →

5090　　5100　　5110

Fig. 6

Fig. 7

Fig. 8

time-slot 0 (CCH interval)   time-slot 1 (SCH interval)

time

Guard interval

CCH

(1) RSU interval

(2) Safety interval

(3) Non-safety
interval

(4) Interval for other
(or future) service

EP 3 547 784 A1

Fig. 9

EP 3 547 784 A1

22

Fig. 10

time

time-slot 1 (SCH interval)

(6) Time-sensitive non-safety (or safety) interval

time-slot 0 (CCH interval)

(4) Reserved Interval

(3) Non-safety interval

(5) Time-sensitive safety interval

(1) RSU interval

(2) Safety interval

Guard interval

CCH

Fig. 11

SN interval

Safety interval (X)    Non-safety
interval (Y)

(a)

| Bits | Usage | Safety interval | Non-safety interval |
|------|-------|-----------------|---------------------|
| 0000 | only safety | 1 | 0 |
| 0001 | only non-safety | 0 | 1 |
| 0010 | safety=non-safety | 1 | 1 |
| 0011 | safety>non-safety | 2 | 1 |
| 0100 | safety>non-safety | 3 | 1 |
| 0101 | safety>non-safety | 4 | 1 |
| 0110 | safety<non-safety | 1 | 2 |
| 0111 | safety<non-safety | 1 | 3 |
| 1000 | safety<non-safety | 1 | 4 |
| reserved bit | | | |

(b)

Fig. 12

Fig. 13

```
                    ┌─────────┐
                    │  Start  │
                    └─────────┘
                         │
                         ▼
    ┌──────────────────────────────────────────┐
    │            Access to CCH                  │─── S13010
    └──────────────────────────────────────────┘
                         │
                         ▼
    ┌──────────────────────────────────────────┐
    │  Receive service advertisement information │─── S13020
    └──────────────────────────────────────────┘
                         │
                         ▼
    ┌──────────────────────────────────────────┐
    │            Access to SCH                  │─── S13030
    └──────────────────────────────────────────┘
                         │
                         ▼
    ┌──────────────────────────────────────────┐
    │          Receive service data             │─── S13040
    └──────────────────────────────────────────┘
                         │
                         ▼
                    ┌─────────┐
                    │   End   │
                    └─────────┘
```

## INTERNATIONAL SEARCH REPORT

| International application No. |
|---|
| **PCT/KR2016/013788** |

### A. CLASSIFICATION OF SUBJECT MATTER

*H04W 74/08(2009.01)i, H04W 74/00(2009.01)i, H04W 72/04(2009.01)i*

According to International Patent Classification (IPC) or to both national classification and IPC

### B. FIELDS SEARCHED

Minimum documentation searched (classification system followed by classification symbols)
H04W 74/08; H04W 24/00; H04H 20/71; H04W 72/04; H04W 4/00; H04W 72/10; H04W 4/04; H04W 74/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: V2X, ITS(Intelligent Transport System), multiple channel, service advertisement information, control channel(CCH), service channel(SCH)

### C. DOCUMENTS CONSIDERED TO BE RELEVANT

| Category* | Citation of document, with indication, where appropriate, of the relevant passages | Relevant to claim No. |
|---|---|---|
| Y | US 2015-0305038 A1 (SHANGHAI RESEARCH CENTRE FOR WIRELESS COMMUNICATIONS) 22 October 2015<br>See paragraphs [0009], [0042]. | 1-2,7-8 |
| A | | 3-6,9-12 |
| Y | US 2012-0093091 A1 (KANG, Po-Chun et al.) 19 April 2012<br>See paragraphs [0033], [0066], [0068]; claim 4; and figures 13, 14. | 1-2,7-8 |
| A | US 2012-0149389 A1 (LIN, Kang-Chiao et al.) 14 June 2012<br>See paragraphs [0020]-[0022]; and figure 1. | 1-12 |
| A | US 2012-0099541 A1 (PARK, Jong Min et al.) 26 April 2012<br>See paragraphs [0011]-[0014]. | 1-12 |
| A | US 2011-0128902 A1 (GUO, Jianlin) 02 June 2011<br>See paragraphs [0023]-[0030]; and claims 1, 2. | 1-12 |

☐ Further documents are listed in the continuation of Box C.　　☒ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 JULY 2017 (20.07.2017) | **24 JULY 2017 (24.07.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

PCT/KR2016/013788

| Patent document cited in search report | Publication date | Patent family member | Publication date |
|---|---|---|---|
| US 2015-0305038 A1 | 22/10/2015 | CN 103873177 A<br>CN 103873177 B<br>WO 2014-090131 A1 | 18/06/2014<br>03/08/2016<br>19/06/2014 |
| US 2012-0093091 A1 | 19/04/2012 | TW 201218713 A | 01/05/2012 |
| US 2012-0149389 A1 | 14/06/2012 | TW 201225718 A<br>TW I458378 B<br>US 8515447 B2 | 16/06/2012<br>21/10/2014<br>20/08/2013 |
| US 2012-0099541 A1 | 26/04/2012 | KR 10-1477281 B1<br>US 8717991 B2 | 30/12/2014<br>06/05/2014 |
| US 2011-0128902 A1 | 02/06/2011 | JP 05542618 B2<br>JP 2011-120232 A<br>US 8995327 B2 | 09/07/2014<br>16/06/2011<br>31/03/2015 |

Form PCT/ISA/210 (patent family annex) (January 2015)